# EUROPÄISCHE PATENTSCHRIFT

(11) **EP 2 005 425 B1**
(45) Veröffentlichungstag und Bekanntmachung des Hinweises auf die Patenterteilung: **11.11.2009**
(21) Anmeldenummer: 07723878.0
(22) Anmeldetag: 02.04.2007
(51) Int. Cl.: G11B 7/0065, G11B 7/24, G11C 13/04, G03H 1/04

(54) **HOLOGRAPHISCHES SPEICHERMATERIAL**
HOLOGRAPHIC STORAGE MATERIAL
MATÉRIAU D'ENREGISTREMENT HOLOGRAPHIQUE

(30) Priorität: 04.04.2006 DE 102006015593
(43) Veröffentlichungstag der Anmeldung: 24.12.2008
(73) Patentinhaber: Tesa Scribos Gmbh, 69126 Heidelberg (DE)
(72) Erfinder: SCHULTE-WIEKING, Kay, 69115 Heidelberg (DE)
(74) Vertreter: Heins, Matthias
(86) Internationale Anmeldenummer: PCT/EP2007/002937
(87) Internationale Veröffentlichungsnummer: WO 2007/115719

(56) Entgegenhaltungen:
- EP-A- 1 523 001
- WO-A-02/15179
- WO-A-98/28738
- WO-A-2004/057594
- US-A1- 2003 107 709
- US-A1- 2004 179 457
- US-A1- 2004 233 831

## Beschreibung

Die vorliegende Erfindung betrifft ein holographisches Speichermaterial wenigstens mit einer Polymerfolie und mit einer metallischen ersten Schicht, wobei die erste Schicht direkt oder indirekt auf der Polymerfolie angeordnet ist.

Holographische Speichermaterialien, können solche Materialien sein, in die eine gewünschte Information in Form eines computergenerierten Hologramms dauerhaft geschrieben werden können. Das computergenerierte Hologramm kann dabei zudem dauerhaft auslesbar sein.

Computergenerierte Hologramme bestehen aus einer Schicht oder mehreren Schichten von Punktematrizen bzw. Punkteverteilungen, die bei einer Beleuchtung mit einem vorzugsweise kohärenten Lichtstrahl zu einer Rekonstruktion der in dem Hologramm einkodierten Informationen führen. Die Punkteverteilung kann dabei als Amplitudenhologramm, Phasenhologramm oder als Kinoform oder aus einer Mischform solcher Hologrammarten berechnet sein. Zur Herstellung von computergenerierten Hologrammen werden diese zuerst berechnet und anschließend mit einer geeigneten Schreibvorrichtung durch Einbringen von Energie in ein Speichermaterial eingeschrieben. Die Auflösung der dabei entstehenden Punktematrix kann im Bereich bis unterhalb von 1 µm liegen. Somit können auf engem Raum Hologramme mit einer hohen Auflösung geschrieben werden, deren Information erst durch Beleuchten mit einem Lichtstrahl und Rekonstruieren des Beugungsbildes ausgelesen werden können. Die Größe der Hologramme kann dabei zwischen weniger 1 mm² und mehreren 1 cm² betragen.

Die zuvor beschriebenen computergenerierten Hologramme können mit einer direkt sichtbaren Information kombiniert werden (Mikroschrift, Mikrobilder).

Neben computergenerierten Hologrammen sind aus dem Stand der Technik auch Prägehologramme bekannt (US 2005/0170259 A1). Durch einen Mehrschichtaufbau können mehrere geprägte Hologramme übereinander angeordnet werden. Dafür ist es erforderlich, dass die Schichten unabhängig voneinander geprägt und anschließend miteinander verbunden werden. Bezüglich der jeweiligen Schichten muss bei diesem Sicherheitselement berücksichtigt werden, dass diese ausreichend dick sind, um sie prägen zu können, ohne die Schicht dabei zu zerstören. Im Gegensatz zu computergenerierten Hologrammen, können Prägehologramme wegen der aufwendigen Herstellung nicht serienmäßig individuell gestaltet werden.

Aus dem Stand der Technik sind eine Mehrzahl von Schreibvorrichtungen zum Schreiben von computergenerierten Hologrammen bekannt, die in ebenen Speichermaterialien die optischen Strukturen der Holgramme einschreiben. Beispielhaft wird dazu auf die Druckschriften WO 02/079881, WO 02/079883, WO 02/084404, WO 02/084405 und WO 03/012549 hingewiesen.

Ebenso sind eine Mehrzahl von Lesevorrichtungen bekannt, die geeignet sind, durch Beleuchten der Hologrammfläche mittels eines Lichtstrahls und einer geeigneten Optik die Rekonstruktion sichtbar oder mittels Aufnahmemitteln elektronisch darstellbar und auswertbar zu machen. Beispielhaft wird dabei auf die Druckschriften DE 101 37 832, WO 02/084588 und WO 2005/111913 verwiesen.

Holographische Speichermaterialien können aus einer Polymerfolie und einer metallischen Schicht bestehen, deren Struktur punktuell durch das Einbringen von thermischer Energie, vorzugsweise mittels eines fokussierten Laserstrahls beeinflusst werden kann.

Ein solches Speichermaterial ist z.B. aus der WO-A-02/15179 bekannt, das zur Abgrenzung in der zweiteiligen Form von Anspruch 1 dient.

Damit das Speichermaterial überhaupt effektiv zu beschreiben ist, muss es über ein Mindestmaß an Absorptionsvermögen verfügen. Dieses Absorptionsvermögen ist während des Schreibprozesses der auslösende Faktor für die Ausbildung eines geschriebenen Punktes.

Die metallische Schicht hat einen wesentlichen Einfluss auf die optischen Eigenschaften, insbesondere die Absorptionseigenschaften des Speichermaterials. Ein entscheidender Parameter der Metallschicht ist dabei deren Dicke, da diese die Absorptionseigenschaften beeinflusst. Folglich muss die metallische Schicht eine bestimmte Dicke aufweisen, um eine ausreichende Absorption der beim Schreiben einfallenden Strahlung sicherzustellen.

Neben den Absorptionseigenschaften spielen aber auch die Transmission und die Reflexion eine Rolle für die Eigenschaften des Speichermaterials, wobei diese weiteren Eigenschaften mehr oder weniger auch von der metallischen Schicht beeinflusst werden. Häufig erscheint ein Speichermaterial mit einer maximalen Absorption nur leicht spiegelnd, gräulich und in Durchsicht semitransparent. Ist ein stärker spiegelndes Speichermaterial erwünscht, kann die Metallschichtdicke und damit die optische Dichte (OD) erhöht werden, was allerdings zu einer merklichen Verringerung der Absorption und damit zu einer erheblichen Steigerung der notwendigen Laserleistung (Strahlungsintensität) für das Schreiben der Punkteverteilung führt. Hohe Laserleistungen stehen aber nur eingeschränkt zur Verfügung oder sind mit hohen Kosten verbunden.

Auch wenn eine geringe Transmittivität gefordert ist, beispielsweise zur Verringerung störender Streulichteinflüsse von der Rückseite des Speichermaterials während des reflektiven Auslesens, muss die OD erhöht werden. Gleiches gilt für den Fall, dass das Speichermaterial durch Belichtung stark beugende diffraktive Strukturen in Transmission erzeugen soll (z.B. Transmissionshologramme). In diesem Fall muss ebenfalls die OD erhöht werden. Im Ergebnis sind die vorgenannten Eigenschaften des Speichermaterials nur eingeschränkt oder nur zu hohen Kosten einzustellen.

Daher liegt der Erfindung das technische Problem zugrunde, ein Speichermaterial mit verbesserten optischen Eigenschaften anzugeben.

Dieses technische Problem wird bei einem Speichermedium der eingangs genannten Art dadurch gelöst, dass eine nichtmetallische zweite Schicht vorgesehen ist, dass eine metallische dritte Schicht vorgesehen ist, dass die zweite Schicht zwischen der ersten und der dritten Schicht angeordnet ist und dass die erste, die zweite und die dritte Schicht zusammen eine Gesamtdicke kleiner als die Wellenlänge der zum Auslesen verwendeten Strahlung aufweisen.

Die Erfindung hat überraschend erkannt, dass durch den beschriebenen Dreischichtaufbau aus erster, zweiter und dritter Schicht auf der Polymerfolie eine gezielte Anpassung der optischen Eigenschaften des Speichermaterials als solches erfolgen kann.

Dabei ist es von wesentlicher Bedeutung, dass die Schichtdicke des Dreischichtaufbaus geringer ist als die Wellenlänge der jeweilige Strahlung, die zum Auslesen der in das Speichermedium eingeschriebenen bzw. einzuschreibenden Punkteverteilung verwendet wird. Die Schichtdicke ist vorzugsweise kleiner als die Wellenlänge des sichtbaren Lichts mit der typischerweise die Punkteverteilung in das Speichermaterial geschrieben und die Hologramme ausgelesen werden. Infolge der geringen Schichtdicke wirken die drei Schichten für elektromagnetische Strahlung mit einer Wellenlänge, die größer ist als die Gesamtdicke der drei Schichten nicht wie drei einzelne Schichten, deren Gesamtdicke deutlich größer wäre als die Wellenlänge der verwendeten elektromagnetischen Strahlung. Die optischen Eigenschaften der ersten, der zweiten und der dritten Schicht können bei entsprechender Wellenlänge nicht unabhängig voneinander beurteilt werden.

Dem Dreischichtaufbau kann dennoch eine einzige Reflektivität zugeordnet werden. Zudem kann ein Absorptionsspektrum erzielt werden, das die Beschriftung mit unterschiedlichen Laserwellenlängen erlaubt.

Die jeweiligen metallischen oder nichtmetallischen Schichten können auch aus jeweils mehreren Teilschichten bestehen, z.B. die erste Schicht aus 3nm Aluminium und 3nm Silber. Die zweite Schicht kann aus SiO₂ und einer weiteren Schicht bestehen, die als Schutz vor Oxidation aufgebracht wurde. Dasselbe gilt für die dritte Schicht, auch diese kann aus mehreren Teilschichten aufgebaut sein.

Darüber hinaus ist es nicht zwingend erforderlich, dass der Schichtaufbau direkt auf die Polymeroberfläche (Folie)aufgebracht ist. Will man einen Belichtungseffekt erzielen, der darauf basiert, dass ein Wärmeeintrag in die Folie genutzt wird, sollten zwischen Folie und Schichtaufbau angeordnete zusätzliche Schichten nicht dicker als 1µm sein. Nutzt man einen Belichtungseffekt, der von der Folie weitestgehend unabhängig ist, ist diese eigentlich nur ein Trägermaterial. Dann kann sich zwischen Folie und dem Schichtaufbau eine beliebige Schicht befinden.

Besonders bevorzugt ist es, wenn die Gesamtdicke der ersten, der zweiten und der dritten Schicht zusammen keiner als 350 nm und damit kleiner als die Wellenlänge des sichtbaren Lichts ist. Weiter vorzugsweise sind die Schichten zusammen sogar dünner als 150 nm. Dann können die bevorzugten Eigenschaften nicht nur für elektromagnetische Wellen mit einer Wellenlänge im Bereich des sichtbaren Lichts, sondern auch für kürzere Wellenlängen, genutzt werden. Die Eigenschaften des Speichermaterials sind bei Gesamtschichtdicken von kleiner als 150 nm zudem einerseits besonders zweckmäßig und andererseits in weiten Bereichen einstellbar.

Bei einer bevorzugten Ausführungsform des Speichermaterials kann vorgesehen sein, dass die erste Schicht und die dritte Schicht eine ungleiche Schichtdicke aufweisen. Dann können in der ersten und in der dritten Schicht unterschiedliche Eigenschaften erreicht werden, selbst wenn diese aus dem gleichen Material bestehen. Zusätzlich können weitere Eigenschaften gezielt durch die Dimensionierung der zweiten Schicht eingestellt werden.

Hinsichtlich der Absorption ist es bei Metallen in Abhängigkeit von der Wellenlänge grundsätzlich so, dass ein Absorptionsmaximum bei Schichtdicken zwischen 2,5 nm bis 10 nm, vorzugsweise zwischen 5 nm und 8 nm existiert. Wenn die erste oder die dritte Schicht eine Dicke aufweist, die in diesem Bereich liegt, sorgt diese Schicht für eine hohe Absorption des Speichermaterials. Die jeweils andere Schicht von der ersten oder der dritten Schicht kann dann eine andere Eigenschaft aufweisen, weil sie dicker oder dünner als die zuvor genannte Schicht ist.

Besonders bevorzugt, wenn auch nicht erforderlich, ist es, wenn die erste Schicht dünner ist als die dritte Schicht, insbesondere dann, wenn die Strahlung von der Seite der Polymerfolie einfällt. Dann kann etwa der Schreibstrahl in der ersten Schicht in hohem Maße absorbiert werden, während der durch die erste Schicht hindurchdringende Teil der Strahlung an der dickeren und somit vorzugsweise eine höhere OD aufweisenden dritten Schicht nahezu vollständig reflektiert wird. Im Ergebnis erhält man ein Speichermaterial mit sowohl einer hohen Absorption als auch einer hohen OD, was bei Speichermaterialien mit lediglich einer metallischen Schicht nicht möglich wäre.

Durch die hohe OD können etwa unerwünschte Streulichteinflüsse vermieden werden, um beispielsweise stark beugende diffraktive Strukturen in Transmission für sogenannte Transmissionshologramme zu erzeugen. Auch beim Auslesen solcher Transmissionshologramme erfolgt der Einfall der Strahlung vorzugsweise von der Seite der Polymerfolie. Zudem kann eine hohe OD auch für einen spiegelnden Dreischichtaufbau sorgen. Mit dem Dreischichtaufbau können ohne weiteres eine OD von 1,9 bis 3 und mehr erreicht werden. Gleichzeitig kann mit dem Dreischichtaufbau der transmittierende Teil der Strahlung auf weniger als 0,1% reduziert werden. Dabei liegt die Absorption vorzugsweise im Bereich von 20% und die Reflexion im Bereich von 80%.

Durch den Dreischichtaufbau aus der ersten, der zweiten und der dritten Schicht lassen sich aber auch andere Eigenschaften des Speichermaterials generieren. Wird beispielsweise die erste und die dritte Schicht in einer Dicke vorgehen, in der die Absorption sehr hoch ist, ergeben sich Absorptionseigenschaften, die sehr viel höher sind, z.B. doppelt so hoch, als für Speichermaterialien mit nur einer metallischen Schicht. Im Ergebnis kann das Speichermaterial sehr einfach mit einer geringen, beispielsweise halben, Intensität des Schreibstrahl beschrieben werden.

Soll nun zusätzlich eine hohe OD erzielt werden, kann eine vierte nichtmetallische und eine fünfte metallische Schicht vorgesehen werden, wobei die vierte Schicht die dritte und die fünfte Schicht gegeneinander isoliert und wobei die fünfte Schicht dicker oder dünner als die erste und die dritte Schicht ist, um für eine hohe OD zu sorgen.

Es können also insbesondere dann, wenn die Einstellung der gewünschten Eigenschaften mit dem Dreischichtaufbau nicht erfolgen kann, weitere Schichten hinzugefügt werden. Dabei wird die allgemeine Reihenfolge des Aufbaus, bei dem sich nicht metallische Schichten und metallische Schichten abwechseln, eingehalten. Vorzugsweise sind dann also drei, fünf, sieben usw. Schichten auf der Polymerfolie angeordnet.

Bei einem bevorzugten Speichermaterial kann daher die erste Schicht eine Schichtdicke zwischen 2,5 nm und 10 nm aufweisen. Zusätzlich oder alternativ kann auch die dritte Schicht eine Schichtdicke zwischen 2,5 nm und 10 nm aufweisen, wobei es besonders bevorzugt sein kann, wenn die erste oder die dritte Schicht eine Schichtdicke von 5 nm bis 8 nm aufweist. Die jeweils andere Schicht, also die dritte bzw. erste Schicht, kann dann beispielsweise eine Schichtdicke zwischen 10 nm und 100 nm haben, um für eine hohe OD zu sorgen. Grundsätzlich können aber auch die erste und die dritte Schicht jeweils die zuletzt genannte geringe Schichtdicke aufweisen.

Bei den metallischen Schichten ist die Absorption grundsätzlich bei einer bestimmten Dicke am größten und nimmt mit größer und mit kleiner werdender Dicke ab. Da das Maximum meist bei geringen Dicken liegt kann es der Handhabbarkeit halber vorteilhaft sein, wenn die Schichten, die keine so große Absorption aufweisen sollen, eher dicker als dünner ausbildet sind. Mit zunehmender Dicke der metallischen Schicht wird diese aber auch silbriger und heller, während metallische Schichten im Bereich des Absorptionsmaximums silbrig-grau wirken können. Gleichzeitig haben diese Schichten aber in aller Regel eine geringe OD.

Um eine größere OD zu erreichen muss die Schichtdicke der metallischen Schicht ausgehend von dem Absorptionsmaximum vergrößert oder verringert werden. In gleicher Weise ist mit Schichtdicken deutlich größer als das Absorptionsmaximum die Sensibilität größer als bei dünneren Schichtdicken, insbesondere im Bereich des Absorptionsmaximums. Unter Sensibilität wird hierbei verstanden, wie hoch die Möglichkeit zu einer qualitativ guten Belichtung eines Transmissionshologramms ist.

Welche Schichtdicken im Einzelnen zu einem Speichermaterial mit den gewünschten Eigenschaften führen, hängt sehr stark von den Anforderungen des Einzelfalls ab. Der Dreischichtaufbau ermöglicht aber in jedem Fall sehr viele Freiheitsgrade für eine gezielte Anpassung des Speichermaterials. Sind die Freiheitsgrade nicht ausreichend, können beliebig viele weitere Schichten ergänzt werden, wobei sich nicht metallische und metallische Schichten vorzugsweise abwechseln.

Hinsichtlich der zweiten Schicht ist es grundsätzlich bevorzugt, wenn diese so dünn ist, dass der Dreischichtaufbau als solcher kleiner als ein vorbestimmter Wert wie etwa 350 nm oder 150 nm bleibt. Gute Ergebnisse wurden mit Gesamtdicken des Dreischichtaufbaus von etwa 110 nm erzielt.

Grundsätzlich nimmt die Absorption des Speichermaterials mit zunehmender Dicke der nichtmetallischen Schicht oder Schichten zu, so dass das Speichermaterial mit zunehmender Schichtdicke dunkler wirkt. Für sehr große Schichtdicken der nichtmetallischen Schicht oder Schichten wird das Speichermaterial farbig, während es bei geringeren Schichtdicken farblos bleibt. Mit der Schichtdicke der zweiten Schicht bzw. der nichtmetallischen Schicht oder Schichten nimmt auch die Sensibilität des Speichermaterials zu. Untersuchungen haben ergeben, dass Schichtdicken der zweiten Schicht zwischen 20 nm und 80 nm für eine Reihe von technischen Anwendungen vorteilhaft sind.

Eine grundsätzliche Beschränkung hinsichtlich der verwendeten Materialien für die erste, die zweite und die dritte Schicht bzw. die metallische Schicht oder Schichten besteht nicht. Allerdings hat sich gezeigt, dass eine einfache Herstellung und Verarbeitung bei geringen Kosten erzielt werden kann, wenn die erste und die dritte Schicht aus Aluminium besteht. Vorteilhaft kann es auch sein, wenn die erste Schicht oder die dritte Schicht oder die erste und die dritte Schicht aus Kupfer, Gold, Silber, Platin oder Titan besteht. Die zweite Schicht kann aus jedem Material bestehen, dass elektrisch nicht leitend und zumindest teiltransparent ist.

Für die zweite Schicht hat sich Siliziumdioxid (SiO₂) als bevorzugt herausgestellt. In jedem Falle ist das nichtmetallische Material aber wenigstens teiltransparent und nicht leitend, damit es zwischen den metallischen Schichten als Dielektrikum wirken kann.

Die Polymerfolie sollte wenigstens teiltransparent für die Strahlung zum Schreiben und Auslesen der Informationen sein. Bevorzugt ist hierbei insbesondere eine Folie aus Polyethylenterephthalat (PET). Auch Polycarbonat (PC) kann als Material für die Polymerfolie zweckmäßig sein. Weiter vorzugsweise ist die Folie verstreckt, wobei monoaxial oder biaxiale Folien zum Einsatz kommen können.

Neben den zuvor im Einzelnen angesprochenen metallischen und nichtmetallischen Schichten können selbstverständlich noch weitere Schichten vorgesehen sein. Diese sind jedoch vorzugsweise auf der der Polymerfolie abgewandten Seite angeordnet, um weder das Schreiben noch das Lesen von Informationen negativ zu beeinflussen. Denkbar ist in diesem Zusammenhang etwa, dass eine Klebstoffschicht aufgebracht ist, um das Speichermaterial auf ein Substrat aufzubringen. Dieses kann ein Produkt, eine Verpackung, ein Dokument oder dergleichen sein.

Alternativ oder zusätzlich wäre es möglich, auch einen Lack oder dergleichen Aufzubringen, um den optischen Eindruck des Speichermaterials wenigstens von dieser Seite nach Belieben gestalten zu können.

Im Folgenden wird die Erfindung anhand von Ausführungsbeispielen näher erläutert, wobei auf die beigefügte Zeichnung Bezug genommen wird. In der Zeichnung zeigen
- Fig. 1: schematisch ein erstes Ausführungsbeispiel des erfindungsgemäßen Speichermaterials,
- Fig. 2: schematisch ein zweites Ausführungsbeispiel des erfindungsgemäßen Speichermaterials und
- Fig. 3: schematisch ein drittes Ausführungsbeispiel des erfindungsgemäßen Speichermaterials.

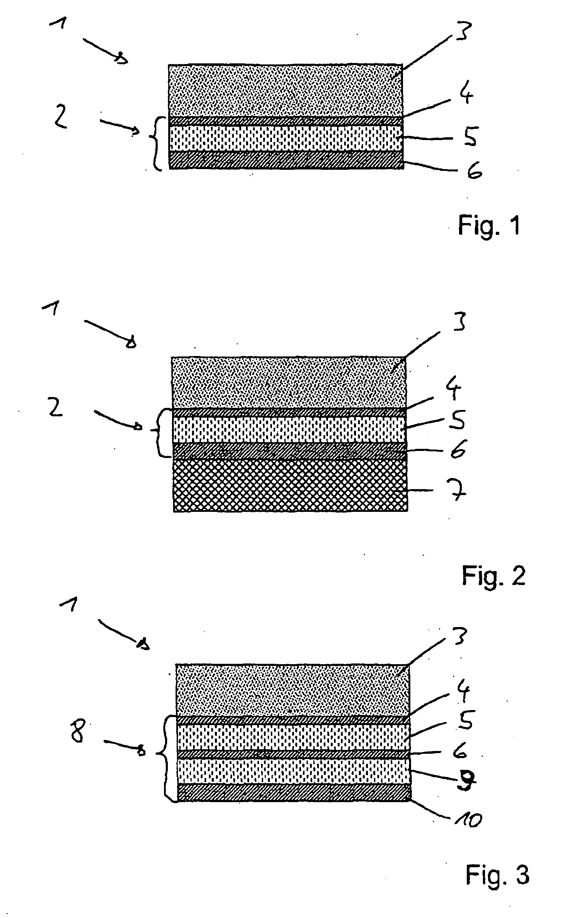

Die Fig. 1 zeigt den Grundaufbau eines Speichermaterials 1, der zuvor bereits als Dreischichtaufbau 2 bezeichnet worden ist, da die Polymerfolie 3, die aufgrund ihrer deutlich höheren Schichtdicke vorzugsweise die mechanischen Eigenschaften des Speichermaterials 1 bereitstellt, drei weitere Schichten 4, 5, 6 aufweist. Zur besseren Veranschaulichung sind die Verhältnisse zwischen den Schichtdicken der einzelnen Schichten nicht maßstabsgetreu wiedergegeben. Vielmehr ist insbesondere die Polymerfolie 3 in Wirklichkeit im Verhältnis zu dem Dreischichtaufbau 2 sehr viel dicker.

Auf der Polymerfolie 3 ist eine erste metallische Schicht 4, darauf eine zweite nicht metallische Schicht 5 und abschließend eine dritte wiederum metallische Schicht 6 angeordnet. Dabei beträgt die Gesamtdicke der ersten Schicht 4, der zweiten Schicht 5 und der dritten Schicht 6 zusammen etwa 110 nm. Die erste Schicht 4, ist etwa 5 nm oder 6 nm stark, da hier ein Absorptionsmaximum liegt. Die zweite Schicht 5 ist nicht stärker als 80 nm und nicht schwächer als 20 nm. Die dritte Schicht 6 ist in diesem Ausführungsbeispiel dünner als die zweite Schicht 5 und weist eine Dicke zwischen 15 nm und 50 nm auf. Die beiden metallischen Schichten 4, 6 sind beide aus Aluminium, während die nichtmetallische Schicht 5 aus SiO₂ besteht.

Am Beispiel des in Fig. 1 dargestellten Speichermaterials 1 wird im Folgenden kurz auf die verschiedenen Möglichkeiten beim Beschreiben des Speichermaterials 1 eingegangen. Dies ist jedoch nur beispielhaft zu verstehen. Je nach Anforderungsprofil an das Speichermaterial 1 kann davon auch beliebig abgewichen werden. Gleiches gilt insbesondere auch dann, wenn ein abweichender Schichtaufbau bevorzugt wird. Dennoch können auf diese Weise grundsätzliche Prinzipien beim Beschreiben eines derartigen Speichermaterials veranschaulicht werden.

Beim Schreiben mit einer geringen Strahlenintensität bzw. Laserleistung kann die erste Schicht 4, in der die Absorption der Strahlung und damit auch der thermische Eintrag am größten ist, punktuell verformt werden. Wird diese verformte Schicht anschließend zum Auslesen mit einem schwächeren Strahl bestrahlt, erhält man ein sogenanntes Phasenhologramm.

Wird die Strahlenintensität beim Beschreiben erhöht, können in der ersten Schicht 4 Löcher entstehen, wodurch man in Transmission ein Amplitudenhologramm und in Reflexion ein Amplitudenhologramm oder Phasenhologramm erhält.

Bei weiter erhöhter Strahlungsenergie kann zusätzlich die dritte Schicht 6 punktuell verformt werden, so dass von der Seite der Polymerfolie 3 ein Amplitudenhologramm oder Phasenhologramm und von der gegenüberliegenden Seite ein Amplitudenhologramm oder Phasenhologramm jeweils in Reflexion erhalten werden kann. Aber auch Amplituden-Transmissionshologramme können bereitgestellt werden, wenn die Strahlenintensität so hoch gewählt wird, dass die erste und die dritte Schicht 6 "durchlöchert" werden.

Bei dem in der Fig. 2 dargestellten Ausführungsbeispiel ist zusätzlich zu dem Dreischichtaufbau 2, der dem aus Fig. 1 entspricht, noch eine zusätzliche Klebeschicht 7 vorgesehen, die bedarfsweise mit einem Substrat verbunden sein kann, auf dem das Speichermaterial 1 vorgesehen sein soll.

Bei dem in der Fig. 3 dargestellten Speichermaterial 1 ist auf der Polymerfolie 3 ein Fünfschichtaufbau 8 vorgesehen, wobei die ersten Schicht 4 und die zweite Schicht 5 eine Dicke von etwa 5 nm oder 6 nm aufweisen. Durch die nichtmetallische vierte Schicht 9 ist die fünfte Schicht 10 von der dritten Schicht 6 beabstandet angeordnet. Die fünfte Schicht 10 weist eine Dicke von wenigstens 15 nm auf. Durch die erste Schicht 4 und die dritte Schicht 6 weist das Speichermaterial 1 eine hohe Absorption und durch die fünfte Schicht 10 zusätzlich noch eine hohe optische Dichte (OD) auf.

Es versteht sich, dass die Schichtdicken auch jede für sich in einer anderen Weise an die geforderten Eigenschaften des Speichermaterials angepasst werden können und bedarfsweise noch um weitere nichtmetallische und oder metallische Schichten ergänzt werden können. Grundsätzlich wird jedoch versucht, mit möglichst wenig also geringstenfalls drei Schichten auszukommen.

## Patentansprüche

1. Holographisches Speichermaterial (1) wenigstens mit einer Polymerfolie (3) und mit einer metallischen ersten Schicht (4),
wobei die erste Schicht (4) direkt oder indirekt auf der Polymerfolie (3) angeordnet ist,
**dadurch gekennzeichnet,**
**dass** eine nichtmetallische zweite Schicht (5) vorgesehen ist,
**dass** eine metallische dritte Schicht (6) vorgesehen ist,
**dass** die zweite Schicht (5) zwischen der ersten Schicht (4) und der dritten Schicht (6) angeordnet ist,
**dass** die erste Schicht (4), die zweite Schicht (5) und die dritte Schicht (6) zusammen eine Gesamtdicke kleiner als die Wellenlänge der zum Auslesen verwendeten Strahlung aufweisen und
**dass** holographische Information durch punktuelle Verformung der ersten Schicht (4) gespeichert ist.

2. Speichermaterial nach Anspruch 1, **dadurch gekennzeichnet,**
**dass** die erste Schicht (4), die zweite Schicht (5) und die dritte Schicht (6) zusammen eine Gesamtdicke kleiner als 350 nm, vorzugsweise kleiner als 150 nm, aufweist.

3. Speichermaterial nach Anspruch 1 oder 2, **dadurch gekennzeichnet,**
**dass** die erste Schicht (4) dünner als die dritte Schicht (6) ist.

4. Speichermaterial nach einem der Ansprüche 1 bis 3, **dadurch gekennzeichnet,**
**dass** die erste Schicht (4) eine Schichtdicke zwischen 2,5 nm und 10 nm aufweist.

5. Speichermaterial nach einem der Ansprüche 1 bis 4, **dadurch gekennzeichnet,**
**dass** die zweite Schicht (5) eine Schichtdicke zwischen 10 nm und 200 nm aufweist.

6. Speichermaterial nach einem der Ansprüche 1 bis 5, **dadurch gekennzeichnet,**
**dass** die dritte Schicht (6) eine Schichtdicke zwischen 10 nm und 100 nm aufweist oder
**dass** die dritte Schicht (6) eine Schichtdicke zwischen 2,5 nm und 10 nm aufweist.

7. Speichermaterial nach einem der Ansprüche 1 bis 6, **dadurch gekennzeichnet,**
**dass** die erste Schicht (4) und die dritte Schicht (6) jeweils eine Aluminiumschicht ist.

8. Speichermaterial nach einem der Ansprüche 1 bis 7, **dadurch gekennzeichnet,**
**dass** die zweite Schicht (5) aus SiO₂ besteht.

9. Speichermaterial nach einem der Ansprüche 1 bis 8, **dadurch gekennzeichnet,**
**dass** die erste Schicht (4), die zweite Schicht (5) und die dritte Schicht (6) zusammen eine optische Dichte (OD) von 1,9 bis 3 aufweisen.

10. Speichermaterial nach einem der Ansprüche 1 bis 9, **dadurch gekennzeichnet,**
**dass** die erste Schicht (4), die zweite Schicht (5) und die dritte Schicht (6) zusammen einen Transmissionsgrad kleiner als 0,1 % aufweisen.

11. Speichermaterial nach einem der Ansprüche 1 bis 10, **dadurch gekennzeichnet,**
**dass** die Polymerfolie (3) eine verstreckte Polymerfolie ist.

12. Speichermaterial nach einem der Ansprüche 1 bis 11, **dadurch gekennzeichnet,**
**dass** die Polymerfolie (3) aus Polyethylenterephthalat (PET) besteht.

13. Speichermaterial nach einem der Ansprüche 1 bis 12, **dadurch gekennzeichnet,**
**dass** auf der dritten Schicht (6) eine Klebstoffschicht (7) zum Aufbringen des Speichermaterials (1) auf ein Substrat vorgesehen ist.

14. Speichermaterial nach einem der Ansprüche 1 bis 13, **dadurch gekennzeichnet,**
**dass** eine nichtmetallische vierte Schicht (9) auf der dritten Schicht (6) angeordnet ist.

15. Speichermaterial nach Anspruch 14, **dadurch gekennzeichnet,**
**dass** eine metallische fünfte Schicht (10) auf der vierten Schicht (9) angeordnet ist.

16. Speichermaterial nach einem der Ansprüche 1 bis 15, **dadurch gekennzeichnet,**
**dass** auf der Polymerfolie (3) eine ungerade Anzahl an Schichten bestehend aus metallischen Schichten (4, 6, 10) und nichtmetallischen Schichten (5, 9) und
**dass** die metallischen Schichten (4, 6, 10) und die nichtmetallischen Schichten (5, 9) stets abwechselnd aufeinander angeordnet sind.

## Claims

1. Holographic storage material (1), having at least a polymer film (3) and a metallic first layer (4), wherein the first layer (4) is arranged directly or indirectly on the polymer film (3), **characterized in that**
a non-metallic second layer (5) is provided,
a metallic third layer (6) is provided,
the second layer (5) is arranged between the first layer (4) and the third layer (6),
the first layer (4), the second layer (5) and the third layer (6) together have an overall thickness of less than the wavelength of the radiation used for reading, and
holographic information is stored by point-wise deformation of the first layer (4).

2. Storage material according to Claim 1, **characterized in that** the first layer (4), the second layer (5) and the third layer (6) together have an overall thickness of less than 350 nm, preferably less than 150 nm.

3. Storage material according to Claim 1 or 2, **characterized in that** the first layer (4) is thinner than the third layer (6).

4. Storage material according to one of Claims 1 to 3, **characterized in that** the first layer (4) has a layer thickness of between 2.5 nm and 10 nm.

5. Storage material according to one of Claims 1 to 4, **characterized in that** the second layer (5) has a layer thickness of between 10 nm and 200 nm.

6. Storage material according to one of Claims 1 to 5, **characterized in that** the third layer (6) has a layer thickness of between 10 nm and 100 nm or that the third layer (6) has a layer thickness of between 2.5 nm and 10 nm.

7. Storage material according to one of Claims 1 to 6, **characterized in that** the first layer (4) and the third layer (6) are in each case an aluminium layer.

8. Storage material according to one of Claims 1 to 7, **characterized in that** the second layer (5) comprises SiO₂.

9. Storage material according to one of Claims 1 to 8, **characterized in that** the first layer (4), the second layer (5) and the third layer (6) together have an optical density (OD) of from 1.9 to 3.

10. Storage material according to one of Claims 1 to 9, **characterized in that** the first layer (4), the second layer (5) and the third layer (6) together have a transmittance of less than 0.1%.

11. Storage material according to one of Claims 1 to 10, **characterized in that** the polymer film (3) is a stretched polymer film.

12. Storage material according to one of Claims 1 to 11, **characterized in that** the polymer film (3) is made of polyethylene terephtalate (PET).

13. Storage material according to one of Claims 1 to 12, **characterized in that** an adhesive layer (7) for applying the storage material (1) to a substrate is provided on the third layer (6).

14. Storage material according to one of Claims 1 to 13, **characterized in that** a non-metallic fourth layer (9) is arranged on the third layer (6).

15. Storage material according to Claim 14, **characterized in that** a metallic fifth layer (10) is arranged on the fourth layer (9).

16. Storage material according to one of Claims 1 to 15, **characterized in that** an odd number of layers comprising metallic layers (4, 6, 10) and non-metallic layers (5, 9) is arranged on the polymer film (3) and the metallic layers (4, 6, 10) and the non-metallic layers (5, 9) are always arranged one on top of the other in an alternating manner.

## Revendications

1. Elément (1) de mémoire holographique qui présente au moins une feuille polymère (3) et une première couche métallique (4),
la première couche (4) étant disposée directement ou indirectement sur la feuille polymère (3),
**caractérisé en ce que**
une deuxième couche (5) non métallique est prévue,
une troisième couche (6) métallique est prévue,
la deuxième couche (5) est disposée entre la première couche (4) et la troisième couche (6),
la première couche (4), la deuxième couche (5) et la troisième couche (6) présentent ensemble une épaisseur totale inférieure à la longueur d'onde du rayonnement utilisé pour la lecture et
l'information holographique est conservée par déformation ponctuelle de la première couche (4).

2. Matériau de mémoire e selon la revendication 1, **caractérisé en ce que** la première couche (4), la deuxième couche (5) et la troisième couche (6) présentent ensemble une épaisseur totale inférieure à 350 nm et de préférence inférieure à 150 nm.

3. Matériau de mémoire selon les revendications 1 ou 2, **caractérisé en ce que** la première couche (4) est plus mince que la troisième couche (6).

4. Matériau de mémoire selon l'une des revendications 1 à 3, **caractérisé en ce que** la première couche (4) présente une épaisseur comprise entre 2,5 nm et 10 nm.

5. Matériau de mémoire selon l'une des revendications 1 à 4, **caractérisé en ce que** la deuxième couche (5) présente une épaisseur comprise entre 10 nm et 200 nm.

6. Matériau de mémoire selon l'une des revendications 1 à 5, **caractérisé en ce que** la troisième couche (6) présente une épaisseur comprise entre 10 nm et 100 nm ou **en ce que** la troisième couche (6) présente une épaisseur comprise entre 2,5 nm et 10 nm.

7. Matériau de mémoire selon l'une des revendications 1 à 6, **caractérisé en ce que** la première couche (4) et la troisième couche (6) sont toutes deux une couche d'aluminium.

8. Matériau de mémoire selon l'une des revendications 1 à 7, **caractérisé en ce que** la deuxième couche (5) est constituée de SiO₂.

9. Matériau de mémoire selon l'une des revendications 1 à 8, **caractérisé en ce que** la première couche (4), la deuxième couche (5) et la troisième couche (6) présentent ensemble une épaisseur optique (OD) de 1,9 à 3.

10. Matériau de mémoire selon l'une des revendications 1 à 9, **caractérisé en ce que** la première couche (4), la deuxième couche (5) et la troisième couche (6) présentent ensemble un degré de transmission inférieur à 0,1 %.

11. Matériau de mémoire selon l'une des revendications 1 à 10, **caractérisé en ce que** la feuille polymère (3) est une feuille polymère étirée.

12. Matériau de mémoire selon l'une des revendications 1 à 11, **caractérisé en ce que** la feuille polymère (3) est constituée de poly(téréphtalate d'éthylène) (PET).

13. Matériau de mémoire selon l'une des revendications 1 à 12, **caractérisé en ce qu'**une couche d'adhésif (7) est prévue sur la troisième couche (6) pour appliquer le matériau de mémoire (1) sur un substrat.

14. Matériau de mémoire selon l'une des revendications 1 à 13, **caractérisé en ce qu'**une quatrième couche non métallique (9) est disposée sur la troisième couche (6).

15. Matériau de mémoire selon la revendication 14, **caractérisé en ce qu'**une cinquième couche métallique (10) est disposée sur la quatrième couche (9).

16. Matériau de mémoire selon l'une des revendications 1 à 15, **caractérisé en ce qu'**un nombre impair de couches constituées de couches métalliques (4, 6, 10) et de couches non métalliques (5, 9) est disposé sur la feuille polymère (3) et **en ce que** les couches métalliques (4, 6, 10) et les couches non métalliques (5, 9) sont toutes disposées l'une au-dessus de l'autre en alternance.
